# EUROPÄISCHE PATENTANMELDUNG

(11) **EP 1 967 966 A1**
(43) Veröffentlichungstag der Anmeldung: **10.09.2008**
(21) Anmeldenummer: 07004481.3
(22) Anmeldetag: 05.03.2007
(51) Int. Cl.: G06F 17/30

(54) **Verfahren zum Betrieb eines Automatisierungssystems**

(71) Anmelder: SIEMENS AKTIENGESELLSCHAFT, 80333 München (DE)
(72) Erfinder: Pohlan, Rudolf, 76337 Waldbronn (DE)

(57) **Zusammenfassung**

Es wird ein Verfahren zum Betrieb eines Automatisierungssystems (10), bei dem automatisierungsspezifische Daten (30, 32, 34, 36) in einer Datenbank (26) abgelegt sind, wobei ein Zugriff auf die Daten (30, 32, 34, 36) unter Verwendung einer Datenbankschnittstelle (38) erfolgt, wobei sämtliche Zugriffe auf die Daten (30, 32, 34, 36) über ein und dieselbe Datenbankschnittstelle (38) erfolgen und wobei bei einem Zugriff auf die Datenbank (26) ein Datum (30, 32, 34, 36), auf das sich der Zugriff bezieht, durch eine eindeutige Referenz (50) bezeichnet wird, angegeben, bei dem an dem über die Referenz (50) bezeichneten Datum (30, 32, 34, 36) ein Puffer (40) gebildet oder verwendet wird und in dem Puffer (40) ein Zustand des Datums (30, 32, 34, 36) gesichert wird.

## Beschreibung

Die Erfindung betrifft ein Verfahren zum Betrieb eines Automatisierungssystems gemäß dem Oberbegriff des Anspruchs 1.

Das Automatisierungssystem umfasst oder hat Zugriff auf eine Datenbank, in der automatisierungssystemspezifische Daten abgelegt oder ablegbar sind. Als automatisierungssystemspezifische Daten kommen dabei z. B. ein oder mehrere Steuerungsprogramme oder Abschnitte solcher Steuerungsprogramme in Betracht.

Zur Formulierung von Steuerungsprogrammen haben sich unterschiedliche Hochsprachen entwickelt, so dass die Datenbank Abschnitte solcher Steuerungsprogramme in unterschiedlichen Hochsprachen umfassen kann. Als Hochsprachen kommen hier insbesondere die Darstellung in Form eines so genannten Funktionsplans (FUP) oder die Darstellung in Form eines so genannten Kontaktplans (KOP) in Betracht. Für den Zugriff auf die von der Datenbank umfassten Daten sind entsprechende Werkzeuge, also z. B. Editoren oder Entwicklungsumgebungen, vorgesehen, mit denen die Daten angelegt, verändert oder gelöscht werden können.

Ein Zugriff auf die Daten erfolgt dabei unter Verwendung einer Datenbankschnittstelle, und zwar derart, dass sämtliche Zugriffe auf die Daten in der Datenbank über ein und dieselbe Datenbankschnittstelle erfolgen. Bei einem Zugriff auf die Datenbank wird das jeweilige Datum, auf das sich der Zugriff bezieht, durch eine eindeutige Referenz bezeichnet, z. B. durch eine Referenz nach Art eines Dateinamens oder durch eine Referenz mit einem sonst geeignet ausgewählten eindeutigen Bezeichner. Hier kommt auch die Adresse, an der das jeweilige Datum in der Datenbank gespeichert ist, also insbesondere dessen Anfangsadresse in der Datenbank, in Betracht.

Der Begriff "Datum" bezeichnet hier und im Folgenden jede benutzerdefinierbare Kombination einfacher, zusammengesetzter oder abstrakter Datentypen. Entsprechend werden die Begriffe "Datum" und "Objekt" synonym verwendet.

Der Erfindung liegt die Erkenntnis zugrunde, dass das Rückgängigmachen von Benutzeroperationen, also Zugriffe auf solche Datenbanken, oder das Wiederherstellen vorher rückgängig gemachter Operationen Dienste sind, die heute von modernen Softwareprogrammen als Systemleistung erwartet werden. Die Benutzeroperationen werden dabei durch eine Aktion, also eine Bedienung des Benutzers, die dem Zugriff auf die Datenbank vorangeht oder diesen einleitet, - in der Regel mittels eines Eingabegerätes, wie der Computertastatur oder Computermaus - vorgenommen. Insbesondere versehentlich durchgeführte Löschvorgänge sind Beispiele für den Wunsch nach einer Möglichkeit, Benutzeroperationen wieder rückgängig machen zu können.

Die Benutzeroperation, genauer der dadurch eingeleitete Zugriff auf die Datenbank, manipuliert Daten in der Datenbank, die vom Softwareprogramm verwaltet wird. Ein typisches Problem besteht nun darin, ein Verfahren zu finden, welches das Rückgängigmachen oder das Wiederherstellen von Benutzeroperationen auf datenbanktechnisch komplexen Objektmodellen, wobei sich die Komplexität aufgrund einer möglichen Vielfalt von Querbeziehungen (Relationen) und Abhängigkeiten zwischen den von der Datenbank umfassten Daten ergibt, derart unterstützt, dass aus Sicht des Benutzers trotzdem ein dokumentenorientiertes Arbeiten suggeriert wird. Für den Benutzer soll der Eindruck entstehen, dass er auf eigenständigen Textdokumenten oder graphischen Dokumenten mit den jeweiligen Editoren oder Entwicklungsumgebungen arbeitet und das Rückgängigmachen oder Wiederherstellen von vorgenommenen Operationen - wie Kopieren, Löschen, Kreieren, Ändern, etc. - für jedes einzelne bearbeitete Dokument separat mit einer hohen Wahrscheinlichkeit möglich ist, obwohl die dabei betroffenen logischen Dokumente datenbanktechnisch nicht abgeschlossen sind, sondern vielmehr zu anderen logischen Dokumenten und Daten in Beziehung stehen. Eine zusätzliche Herausforderung stellen in diesem Zusammenhang so genannte Mehrbenutzersysteme dar, bei denen mehrere Benutzer gleichzeitig auf denselben Datenbestand Zugriff nehmen können.

Der im vorigen Abschnitt eingeführte Begriff "Dokument" kann sich, wie oben kurz skizziert, dabei sowohl auf ein einzelnes Datum als auch auf eine durch den Benutzer festlegbare Kombination einer Mehrzahl von Daten beziehen. Ein Dokument kann in diesem Kontext z. B. eine Darstellung eines Steuerungsprogramms in einer bestimmten Hochsprache, z. B. KOP, sein. Im einfachsten Fall umfasst das Dokument nur ein einzelnes Datum, also z. B. nur einen einzelnen in Form eines Kontaktplans dargestellten Funktionsblock, oder mehrere Daten dieser oder ähnlicher Art.

Bei den bekannten Ansätzen, die sich mit der oben geschilderten Problematik befassen, wird einerseits versucht, die Problematik von vornherein zu vermeiden. Dazu sind dokumentenbasierte Softwaresysteme oder Softwareprogramme vorgesehen, die die jeweiligen Daten nicht gemeinsam, wie dies bei der Erfindung zugrunde gelegt wird, also z. B. in einer Datenbank, verwalten. In diesen Fällen werden die Dokumente bereits in eigenen Dateien verwaltet. Das Rückgängigmachen oder Wiederherstellen von Benutzeraktionen bezieht sich deshalb nur auf eine Datei und damit auf das Dokument selbst. Beziehungen zwischen Dokumenten und Abhängigkeiten zu anderen Dateien werden dabei entweder mittels so genannter lose gekoppelter Referenzen (Links) hergestellt oder die abhängigen Daten werden redundant (embedded) vorgehalten. Als wesentlicher Nachteil gilt für diesen Ansatz die fehlende durchgängige Datenverwaltung und der damit potentiell verbundene Datenverlust, weil das referenzierte Dokument jederzeit unkontrolliert gelöscht oder an einem anderen Ort gespeichert werden kann und damit nicht mehr erreichbar ist. Die erwähnte redundante Speicherung der Dokumentinformation verhindert darüber hinaus ein zentrales Ändern. In einem solchen Fall müsste nämlich in allen Dokumenten, die diese Information redundant enthalten, eine Anpassung vorgenommen werden. Der Nachteil des ungewollten Veraltens des Dokuments wird mit einer solchen Lösung provoziert.

Auf der anderen Seite bieten softwaretechnische Programmsysteme, die fortschrittlich Dokumente und Daten durchgängig, z. B. in einer gemeinsamen Datenbank, verwalten, entweder gar keine Funktion zum Rückgängigmachen oder Wiederherstellen von Benutzeraktionen an oder diese Funktion arbeitet nicht dokumentenorientiert, d. h., das Rückgängigmachen oder Wiederherstellen bezieht sich auf die zuletzt durchgeführten Benutzeraktionen unabhängig vom gerade im Zugriff befindlichen Dokument. Der Lösungsansatz, zu allen Datenmanipulationsfunktionen eine inverse Funktion (Umkehrfunktion) zu implementieren, stellt heute eine Notlösung des Problems dar. Die Entwicklung von Umkehrfunktionen ist dabei insbesondere bei komplexen Programmsystemen nur bedingt praktikabel. Zudem ist die Entwicklung solcher Funktionen mit erheblichem Aufwand und damit einhergehenden Kosten verbunden. Das dokumentenzentrierte Verwalten der Umkehrfunktion stellt eine weitere Hürde dar, weil dies proprietär entwickelt werden müsste.

Der Erfindung liegt als Aufgabe zugrunde, eine Lösung anzugeben, bei der die o.g. Nachteile vermieden oder zumindest deren Auswirkungen reduziert werden, und zwar bei Beibehaltung einer durchgängigen Verwaltung der im Zugriff befindlichen Daten in einer Datenbank mit einer Datenbankschnittstelle, über die sämtliche Zugriffe auf die Daten erfolgen.

Gemäß der Erfindung ist dazu vorgesehen, bei einem Verfahren der o.g. Art an dem über die Referenz bezeichneten Datum einen Puffer zu bilden und/oder zu verwenden und in diesem Puffer einen Zustand des Datums vor dem Zugriff zu speichern.

Der Ansatz gemäß der Erfindung verlagert gleichsam den bisher einzig in Kombination mit der zentralen Datenbankschnittstelle möglichen Puffer in die Datenbank hinein und ermöglicht eine Bildung jeweils eines Puffers an grundsätzlich jedem Datum. Damit sind auch für eine zentrale Datenhaltung in einer Datenbank Verhältnisse geschaffen, wie sie z. B. bei dokumentenbasierten Softwaresystemen, wie oben beschrieben, vorherrschen, bei der ein Zugriff auf jedes Dokument individuell erfolgt und insoweit in Bezug auf jedes Dokument ein Puffer zum Rückgängigmachen oder Wiederherstellen von Benutzeroperationen verwaltet werden kann.

Zum Rückgängigmachen eines Zugriffs auf ein Datum kann ein Zustand des Datums vor dem Zugriff unter Verwendung des diesem Datum zugeordneten Puffers wiederhergestellt werden.

Weitere Vorteile und Einzelheiten ergeben sich anhand der Unteransprüche. Dabei verwendete Rückbeziehungen weisen auf die weitere Ausbildung des Gegenstandes des Hauptanspruches durch die Merkmale des jeweiligen Unteranspruches hin; sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Wenn ein Datum der Datenbank eine Beziehung zu zumindest einem weiteren Datum der Datenbank aufweist und von dem Zugriff auf das Datum auch das weitere Datum betroffen ist, ist vorteilhaft vorgesehen, dass für jedes von dem Zugriff betroffene Datum in dessen Puffer der Zustand des jeweiligen Datums vor dem Zugriff gesichert und der gesicherte Zustand im Puffer des oder jedes weiteren Datums mit dem gesicherten Zustand im Puffer des Datums verknüpft wird. Auf diese Art und Weise ist eine datentechnisch saubere Zuordnung der gesicherten Zustände zu den jeweils von dem Zugriff betroffenen Daten, also dem Datum, auf das sich der Zugriff zunächst bezogen hat, und das oder jedes von dem Zugriff ebenfalls betroffene weitere Datum, sichergestellt.

Zum Rückgängigmachen eines Zugriffs auf ein Datum, von dem zumindest ein weiteres Datum betroffen ist, ist dann weiter bevorzugt vorgesehen, dass unter Verwendung des diesem Datum zugeordneten Puffers ein Zustand des Datums vor dem Zugriff und unter Verwendung etwaiger Verknüpfungen zwischen dem gesicherten Zustand im Puffer des Datums und einem gesicherten Zustand im Puffer des oder jedes weiteren Datums ein Zustand jedes weiteren Datums vor dem Zugriff wiederhergestellt wird.

Wenn vor einem Rückgängigmachen eines Zugriffs auf ein Datum überprüft wird, ob der in dem diesem Datum zugeordneten Puffer vorgehaltene gesicherte Zustand mit dem gesicherten Zustand in einem Puffer eines anderen Datums verknüpft ist, ist es möglich, das Rückgängigmachen nur dann zuzulassen, wenn das Datum der Ausgangspunkt der Verknüpfung, also gleichsam die Wurzel der Verknüpfung und nicht das Ziel der Verknüpfung ist und damit dasjenige Datum darstellt, über das ursprünglich der Zugriff in die Datenbank stattgefunden hat. Eine Sperrung einer Möglichkeit zum Rückgängigmachen einer Operation für ein derartiges weiteres Datum, das von einem Zugriff auf ein anderes Datum betroffen war, schränkt zwar den Zugriff auf weitere in dem diesem weiteren Datum zugeordneten Puffer enthaltene gesicherte Zustände ein, schützt aber gleichzeitig davor, dass ein gesicherter Zustand eines solchen weiteren Datums irrtümlich im Kontext dieses weiteren Datums und nicht, wie es allein richtig wäre, im Kontext desjenigen Datums, dessen Verwendung ursprünglich die Sicherung des Zustands des jeweiligen weiteren Datums ausgelöst hat, rückgängig gemacht wird.

Das oben skizzierte Betriebsverfahren ist üblicherweise in Software implementiert, so dass die Erfindung auch ein Computerprogramm mit durch einen Computer ausführbaren Programmcodeanweisungen zur Implementierung des oben skizzierten und nachfolgend weiter beschriebenen Betriebsverfahrens sowie ein Computerprogrammprodukt, insbesondere ein Speichermedium, mit einem solchen Computerprogramm betrifft. Des Weiteren betrifft die Erfindung auch ein Automatisierungssystem mit zumindest einem Automatisierungsgerät und einem diesem zugeordneten Speicher, in dem ein Computerprogramm der o.g. Art implementiert ist.

Schließlich betrifft die Erfindung auch die Verwendung des oben skizzierten und nachfolgend weiter beschriebenen Betriebsverfahrens bei Softwareapplikationen, die auf ihre Daten über eine einzelne Datenbankschnittstelle zugreifen, wobei durch die erfindungsgemäße Verwendung des Betriebsverfahrens eine Möglichkeit geschaffen wird, mit der auch eine Mehrzahl sich auf unterschiedliche Daten beziehende, aufeinander folgende Zugriffe auf die Datenbank und die davon umfassten Daten im Kontext des jeweiligen Datums rückgängig gemacht werden können.

Nachfolgend wird ein Ausführungsbeispiel der Erfindung anhand der Zeichnung näher erläutert, das nicht als Einschränkung der Erfindung zu verstehen ist. Vielmehr sind im Rahmen der vorliegenden Offenbarung zahlreiche Abänderungen und Modifikationen möglich, insbesondere solche Varianten und Kombinationen, die z. B. durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen. Einander entsprechende Gegenstände oder Elemente sind in allen Figuren mit den gleichen Bezugszeichen versehen.

Darin zeigen:
- FIG 1: ein Automatisierungssystem mit einer Datenbank,
- FIG 2: die Datenbank mit einer Datenbankschnittstelle gemäß dem Stand der Technik,
- FIG 3: eine Datenbank, wie sie dem Ansatz gemäß der Erfindung zugrunde liegt, und
- FIG 4: eine graphische Veranschaulichung von Abhängigkeiten zwischen in der Datenbank gemäß FIG 3 vorgehaltenen Daten und sich danach ergebenden Abhängigkeiten zwischen gesicherten Zuständen in den den Daten zugeordneten Puffern zum Zwischenspeichern eines Zustands des jeweiligen Datums vor einem Zugriff darauf.

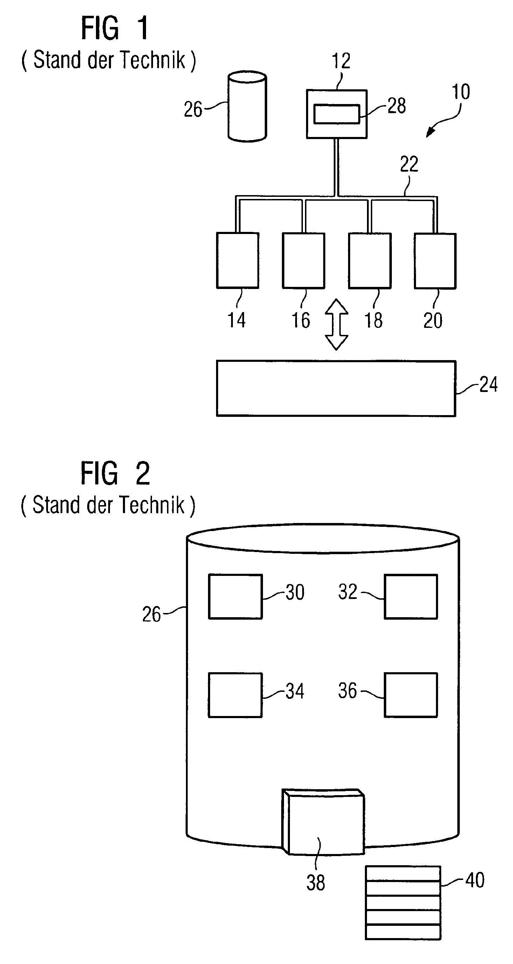

FIG 1 zeigt in schematisch vereinfachter Darstellung ein an sich grundsätzlich bekanntes Automatisierungssystem 10, das in der dargestellten Situation aus einer Mehrzahl von Automatisierungsgeräten 12, 14, 16, 18, 20 gebildet ist, die untereinander kommunikativ über einen Bus 22, z. B. einen so genannten Feldbus, verbunden sind. Das Automatisierungssystem 10 ist insgesamt zur Steuerung und/oder Überwachung eines nicht näher dargestellten technischen Prozesses 24 vorgesehen. Das Automatisierungssystem 10 hat Zugriff auf eine Datenbank 26, und zwar entweder indem die Datenbank 26 einem der Automatisierungsgeräte 12, 14, 16, 18, 20 logisch oder räumlich zugeordnet ist, z. B. indem die Datenbank 26 in einem von dem Automatisierungsgerät 12 umfassten Speicher 28 implementiert ist, oder indem über den Bus 22 ein Zugriff auf die Datenbank 26 möglich ist.

FIG 2 zeigt die Datenbank 26 in einer vergrößerten Ansicht, zur schematisch vereinfachten Verdeutlichung der der Erfindung zugrunde liegenden Problematik. In der Datenbank 26 kann eine Mehrzahl von Daten 30, 32, 34, 36 gespeichert sein. Der Zugriff auf jedes von der Datenbank 26 umfasste Datum 30, 32, 34, 36 erfordert die Verwendung einer Datenbankschnittstelle 38. Die Datenbankschnittstelle 38 ist die einzige Schnittstelle, über die ein definierter Zugriff auf die Datenbank 26 möglich ist. Entsprechend erfolgt jeder Zugriff auf von der Datenbank 26 umfasste Daten 30, 32, 34, 36 über ein und dieselbe Datenbankschnittstelle 38.

Bisherige Ansätze, die sich mit der Problematik des Rückgängigmachens oder Wiederherstellens von Benutzeroperationen befasst haben, haben vorgesehen, dass der Datenbankschnittstelle 38 ein Puffer 40 zugeordnet ist, in dem ein Zustand eines von einem Zugriff betroffenen Datums 30, 32, 34, 36 vor dem Zugriff zur späteren Wiederherstellung gespeichert werden kann. Ein Problem tritt bei diesem Ansatz jedoch dann auf, wenn von einer Folge von Zugriffen auf Daten 30, 32, 34, 36 in der Datenbank 26 unterschiedliche Daten 30, 32, 34, 36 betroffen sind. Zur Unterscheidung werden im Folgenden die in FIG 2 graphisch dargestellten Daten 30, 32, 34, 36 als erstes Datum 30, zweites Datum 32, drittes Datum 34 und viertes Datum 36 bezeichnet. Wenn in einer hypothetischen Anwendungssituation zunächst ein Zugriff auf das zweite Datum 32 erfolgt, danach ein Zugriff auf das vierte Datum 36, ist über den Puffer 40 zwar noch der ursprüngliche Zustand des vierten Datums 36 wiederherstellbar, nicht jedoch der ursprüngliche Zustand des zweiten Datums 32, ohne vorher den ursprünglichen Zustand des vierten Datums 36 wiederhergestellt zu haben.

Die Erfindung sieht nun - kurz gefasst - vor, einen zuvor nur "außerhalb" der Datenbank 26 gebildeten Puffer 40 (FIG 2) je nach Bedarf zu vervielfältigen und die sich auf diese Weise ergebenden Puffer innerhalb der Datenbank 26, und zwar in Kombination mit den von Zugriffen auf die Datenbank 26 betroffenen Daten 30, 32, 34, 36 vorzusehen, wie im Folgenden beschrieben werden wird.

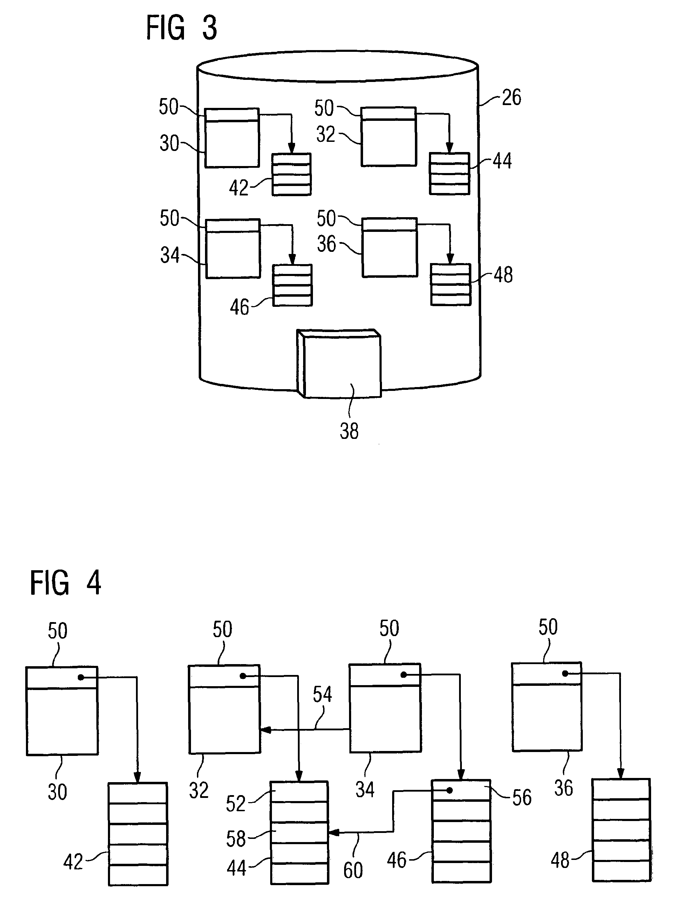

FIG 3 zeigt erneut die Datenbank 26 (vgl. FIG 2). In der Datenbank 26 sind exemplarisch eine Anzahl von Daten 30, 32, 34, 36 gespeichert. Sämtliche Zugriffe auf diese Daten 30, 32, 34, 36 erfolgen über ein und dieselbe Datenbankschnittstelle 38. Anders als bei der Darstellung in FIG 2, die im Wesentlichen die Situation, wie sie im Stand der Technik bekannt ist, darstellt, ist gemäß der Erfindung vorgesehen, dass jedem in der Datenbank 26 gespeicherten Datum 30, 32, 34, 36 ein eigener Puffer 42, 44, 46, 48 zugeordnet oder zuordenbar ist. Die dem jeweiligen Datum 30, 32, 34, 36 jeweils lokal zugeordneten Puffer 40, 42, 44, 46, 48 ersetzen den im Stand der Technik bekannten, für sämtliche Zugriffe auf die Datenbank 26 allein zur Verfügung stehenden Puffer 40 (FIG 2).

Zur Verknüpfung zwischen Datum 30, 32, 34, 36 und Puffer 42, 44, 46, 48 ist vorgesehen, dass bei einem Zugriff auf die Datenbank 26, genauer bei einem Zugriff auf ein Datum 30, 32, 34, 36 in der Datenbank 26, das jeweilige Datum 30, 32, 34, 36, auf das sich der Zugriff bezieht, durch eine eindeutige Referenz 50 bezeichnet wird. Als eine derartige Referenz 50 kommt eine Startadresse der von dem jeweiligen Datum 30, 32, 34, 36 umfassten Daten in dem von der Datenbank 26 umfassten Speicher 28 in Betracht. Genauso kommt als Referenz 50 eine eindeutige Bezeichnung etwa nach Art eines Dateinamens oder dergleichen in Betracht. Jeder einem Datum 30, 32, 34, 36 zugeordnete Puffer 40, 42, 44, 46, 48 ist mit der jeweiligen das Datum 30, 32, 34, 36 eindeutig bezeichnenden Referenz 50 verknüpft.

Anders als bei der abschließenden Erläuterung von FIG 2 skizziert, ist mit der Vielzahl der gleichsam innerhalb der Datenbank 26 vorgehaltenen Puffer 42, 44, 46, 48 jetzt ein Rückgängigmachen oder Wiederholen von Zugriffen auf in der Datenbank 26 gespeicherte Daten 30, 32, 34, 36 in Bezug auf das jeweilige Datum 30, 32, 34, 36, auf das der Zugriff erfolgt ist, möglich. Wenn z. B. - mit gleicher Terminologie wie zuletzt im Zusammenhang mit FIG 2 - zunächst ein Zugriff auf das zweite Datum 32 erfolgt, wird der bisherige Zustand dieses Datums 32 in dem diesem Datum 32 über dessen Referenz 50 zugeordneten Puffer 44 gesichert. Wenn daraufhin ein Zugriff auf das vierte Datum 36 erfolgt, wird der vorherige Zustand dieses Datums 36 in dem diesem Datum 36 zugeordneten Puffer 48 gesichert. Mit derart gesicherten Zuständen ist es ohne weiteres möglich, entweder den gesicherten Zustand des vierten Objekts 36 oder den gesicherten Zustand des zweiten Objekts 32 rückgängig zu machen, weil die gesicherten Zustände jeweils in unabhängigen Puffern 44, 48 hinterlegt sind.

FIG 4 zeigt zur Verdeutlichung einer Besonderheit des erfindungsgemäßen Betriebsverfahrens im Falle von Abhängigkeiten unter in der Datenbank 26 (FIG 3) gespeicherten Daten 30, 32, 34, 36 nur noch diese Daten 30, 32, 34, 36, um nicht durch eine zusätzliche Darstellung der Datenbank 26 selbst und der einzigen Datenbankschnittstelle 38 unnötig die Übersicht zu erschweren.

Wenn zunächst von einer vergleichsweise einfachen Konstellation, bei der keine Beziehungen des Datums 30, 32, 34, 36, auf das der Zugriff erfolgt, zu anderen Daten 30, 32, 34, 36 in der Datenbank 26 bestehen, ausgegangen wird, erfolgt z. B. bei einem Zugriff auf das zweite Datum 32 eine Sicherung des Zustands dieses Datums 32 vor dem Zugriff in dem diesem Datum 32 über dessen Referenz 50 zugeordneten Puffer. Der gesicherte Zustand wird als erster gesicherter Zustand 52 im Puffer 44 abgelegt. Wenn daraufhin ein Zugriff auf das dritte Datum 34 erfolgt und dieses Datum eine Beziehung 54 z. B. zu dem zweiten Datum 32, als weiteres Datum 30, 32, 34, 36 der Datenbank 26, und ggf. weitere gleiche oder gleichartige, nicht dargestellte Beziehungen aufweist und von dem Zugriff auf das dritte Datum 34 auch das oder jedes durch eine solche Beziehung 54 referenzierte weitere Datum 32 betroffen ist, wird für jedes von dem Zugriff betroffene Datum 34, 32 in dessen Puffer 46, 44 der Zustand des jeweiligen Datums 34, 32 vor dem Zugriff gesichert. Auf diese Weise entstehen bei dem exemplarisch zugrunde gelegten Zugriff auf das dritte Datum 34 ein zweiter und ein dritter gesicherter Zustand 56, 58, wobei der zweite gesicherte Zustand 56 den Zustand des dritten Datums 34 vor dem Zugriff und der dritte gesicherte Zustand 58 den Zustand des zweiten Datums 32 vor dem Zugriff repräsentiert. Die auf diese Weise gesicherten Zustände 56, 58 sind in den den jeweiligen Daten 32, 34 zugeordneten Puffern 44, 46 gespeichert.

Zum Rückgängigmachen eines Zugriffs auf ein Datum 30, 32, 34, 36, das Beziehungen zu mindestens einem weiteren Datum 30, 32, 34, 36 der Datenbank 26 aufweist, so dass von dem Zugriff nicht nur das eigentlich in Zugriff genommene Datum 30, 32, 34, 36, sondern zumindest auch ein weiteres Datum 30, 32, 34, 36 betroffen ist, ist vorgesehen, dass unter Verwendung des dem eigentlich in Zugriff genommenen Datum 30, 32, 34, 36 zugeordneten Puffers 42, 44, 46, 48 ein Zustand dieses Datums vor dem Zugriff wiederhergestellt wird. Um auch den Zustand des oder jedes von einem solchen Zugriff ebenfalls betroffenen Datums 30, 32, 34, 36 rückgängig zu machen, ist vorgesehen, dass die beim Zugriff gesicherten Zustände 56, 58 durch eine Verknüpfung 60 einander zugeordnet werden. Beim Rückgängigmachen eines Zugriffs der oben skizzierten Art, bei dem auch mindestens ein weiteres Datum 30, 32, 34, 36 betroffen ist, wird dann im Zusammenhang mit dem Wiederherstellen des gesicherten Zustands 52 des eigentlich in Zugriff genommenen Datums 30, 32, 34, 36 unter Verwendung etwaiger Verknüpfungen 60 zwischen dem jeweiligen gesicherten Zustand 56 im Puffer des in Zugriff genommenen Datums 30, 32, 34, 36 und einem gesicherten Zustand 56 im Puffer 42, 44, 46, 48 des weiteren Datums 30, 32, 34, 36 ein Zustand des weiteren Datums 30, 32 vor dem Zugriff wiederhergestellt.

Die Komplexität etwaiger Beziehungen 54 zwischen den in der Datenbank 26 gespeicherten Daten 30, 32, 34, 36 ist durch das erfindungsgemäße Betriebsverfahren in keiner Weise eingeschränkt und das skizzierte Szenario mit nur einer Beziehung 54 ist hier nur aus Gründen der vergleichsweise einfachen Darstellbarkeit gewählt. Mit einer Komplexität von Beziehungen 54 zwischen den in der Datenbank 26 gespeicherten Daten 30, 32, 34, 36 ist für die sich im Zusammenhang mit dem Zugriff ergebenden gesicherten Zustände 52, 56, 58 unmittelbar auch eine entsprechende Komplexität der sich ergebenden Verknüpfungen 60 zwischen den gesicherten Zuständen 52, 56, 58 in den Puffern 42, 44, 46, 48 korreliert.

Eine weitere Besonderheit der Erfindung besteht noch darin, dass vor einem Rückgängigmachen eines Zugriffs auf ein Datum 30, 32, 34, 36 überprüft wird, ob der in dem diesem Datum 30, 32, 34, 36 zugeordneten Puffer 42, 44, 46, 48 vorgehaltene gesicherte Zustand 58 mit einem gesicherten Zustand 56 in einem Puffer 42, 44, 46, 48 eines anderen Datums 30, 32, 34, 36 verknüpft ist. Wenn eine solche Situation erkannt wird, handelt es sich nämlich um einen Zugriff, der zur Vermeidung von Inkonsistenzen nicht im Kontext des jeweiligen Datums (vgl. zweites Datum 32 und dessen als dritten gesicherten Zustand 58 gesicherten Zustand) rückgängig gemacht werden darf. Der gesicherte Zustand eines solchen Datums 30, 32, 34, 36 soll bevorzugt nur dann wiederhergestellt werden, wenn die Wiederherstellung im Kontext desjenigen Datums 30, 32, 34, 36 erfolgt, auf das sich der Zugriff ursprünglich bezogen hat (vgl. in FIG 4 das dritte Datum 34 und dessen als zweiten gesicherten Zustand gesicherten Zustand, der über die Verknüpfung 56 mit dem als dritten gesicherten Zustand 58 gesicherten Zustand des von dem Zugriff auf das dritte Datum 34 ebenfalls betroffenen zweiten Datums 32 verknüpft ist). In einer solchen Konstellation ist also das Rückgängigmachen eines gesicherten Zustands 58 in einem Puffer 42, 44, 46, 48, der durch eine Verknüpfung 60 mit mindestens einem anderen gesicherten Zustand 56 in einem der Puffer 42, 44, 46, 48 assoziiert ist, nicht möglich. Das Vorgesagte gilt allerdings nur dann, wenn das jeweilige Datum, hier das zweite Datum 32, mittelbar oder unmittelbar das Ziel einer Verknüpfung 60 ist. In der dargestellten Situation in FIG 4 ist der dritte gesicherte Zustand 58 selbst das Ziel der Verknüpfung 60, so dass mittelbar der dem zweiten Datum 32 zugeordnete Puffer 44 als Ziel der Verknüpfung 60 und insoweit auch das zweite Datum 32 selbst mittelbar als Ziel der Verknüpfung aufgefasst werden kann. Das Rückgängigmachen eines Zugriffs dieser Art ist gleichwohl ohne weiteres möglich, wenn das jeweilige Datum, hier das dritte Datum 34, Ausgangspunkt der Verknüpfung 60 ist. Hier ist in der dargestellten Situation gemäß FIG 4 der zweite gesicherte Zustand 56 Ausgangspunkt der Verknüpfung zum dritten gesicherten Zustand 58, wobei der zweite gesicherte Zustand in dem dem dritten Datum 34 zugeordneten Puffer 46 gespeichert ist, so dass der diesem Datum 34 zugeordnete Puffer mittelbar als Ausgangspunkt der Verknüpfung 60 und im weiteren Zusammenhang auch das dritte Datum 34 selbst als Ausgangspunkt der Verknüpfung 60 aufgefasst werden kann.

Entsprechend dem Ansatz gemäß der Erfindung wird durch die verteilte Verwaltung von als Undo/Redo-Buffern fungierenden Puffern 42, 44, 46, 48 an definierten Repräsentanten, z. B. einer eindeutigen Referenz 50, von Objekten, Dokumenten oder allgemeinen Daten 30, 32, 34, 36 in einer Datenbank 26 ein "dokumentenlokales" Undo/Redo suggeriert. Als wesentlicher Vorteil ergibt sich damit für den Anwender des Softwaresystems ein Systemverhalten, wie er es z. B. von heute üblichen Büroanwendungen gewohnt ist. Aus Anwendersicht wirken die als Dokumente oder dergleichen in Editoren, Entwicklungsumgebungen oder Objektmanagern verwalteten und/oder bearbeiteten Daten 30, 32, 34, 36 wie abgeschlossene, separat verwaltete Dokumente. Die Undo/Redo-Funktion kann damit erstmals unmittelbar im Kontext des jeweiligen Dokuments, d. h. im Kontext des jeweiligen Datums 30, 32, 34, 36 angeboten werden.

Der integrative Ansatz der vorgestellten Lösungsidee vermeidet Notlösungen wie das Entwickeln von proprietären Umkehrfunktionen. Dem Anwender werden darüber hinaus keine Undo/Redo-Mechanismen zugemutet, die sich ausschließlich an der Reihenfolge der Datenmanipulation orientieren (vgl. FIG 2). Bei komplexen Softwareprogrammsystemen mit vielen verschiedenen Dokumenttypen und/oder darauf zugreifenden Applikationen, wie Editoren, Entwicklungsumgebungen, Objektmanagern oder dergleichen, wäre dies nicht erwartungskonform. Die Objektmodellierung des Softwareprogrammsystems lässt Abhängigkeiten und Beziehungen zwischen den verschiedenen Daten 30, 32, 34, 36 zu. Das Verfahren setzt gerade keine abgeschlossenen Dokumente als Datum 30, 32, 34, 36 in der Datenorganisation voraus, sondern erlaubt auch Beziehungen zwischen den einzelnen Daten 30, 32, 34, 36 und so bei einem Zugriff auf ein Datum 30, 32, 34, 36, von dem auch mindestens ein weiteres Datum 30, 32, 34, 36 betroffen ist, einerseits die betroffenen Daten 30 bis 36 zu sichern und andererseits im Kontext desjenigen Datums, auf das sich der Zugriff ursprünglich bezog, wiederherzustellen.

Damit lässt sich die Erfindung kurz wie folgt darstellen:
Es wird ein Verfahren zum Betrieb eines Automatisierungssystems 10, bei dem automatisierungsspezifische Daten 30, 32, 34, 36 in einer Datenbank 26 abgelegt sind, wobei ein Zugriff auf die Daten 30, 32, 34, 36 unter Verwendung einer Datenbankschnittstelle 38 erfolgt, wobei sämtliche Zugriffe auf die Daten 30, 32, 34, 36 über ein und dieselbe Datenbankschnittstelle 38 erfolgen und wobei bei einem Zugriff auf die Datenbank 26 ein Datum 30, 32, 34, 36, auf das sich der Zugriff bezieht, durch eine eindeutige Referenz 50 bezeichnet wird, angegeben, bei dem an dem über die Referenz 50 bezeichneten Datum 30, 32, 34, 36 ein Puffer 40 gebildet oder verwendet wird und in dem Puffer 40 ein Zustand des Datums 30, 32, 34, 36 gesichert wird.

## Patentansprüche

1. Verfahren zum Betrieb eines Automatisierungssystems (10), bei dem automatisierungssystemspezifische Daten (30, 32, 34, 36) in einer Datenbank (26) abgelegt sind, wobei ein Zugriff auf die Daten (30, 32, 34, 36) unter Verwendung einer Datenbankschnittstelle (38) erfolgt und wobei sämtliche Zugriffe auf die Daten (30, 32, 34, 36) über ein und dieselbe Datenbankschnittstelle (38) erfolgen, wobei bei einem Zugriff auf die Datenbank (26) ein Datum (30, 32, 34, 36), auf das sich der Zugriff bezieht, durch eine eindeutige Referenz (50) bezeichnet wird, **dadurch gekennzeichnet, dass** an dem über die Referenz (50) bezeichneten Datum (30, 32, 34, 36) ein Puffer (40) gebildet oder verwendet wird und dass in dem Puffer (40) ein Zustand des Datums (30, 32, 34, 36) vor dem Zugriff gesichert wird.

2. Betriebsverfahren nach Anspruch 1, wobei zum Rückgängigmachen eines Zugriffs auf ein Datum (30, 32, 34, 36) unter Verwendung des diesem Datum (30, 32, 34, 36) zugeordneten Puffers ein Zustand des Datums (30, 32, 34, 36) vor dem Zugriff wiederhergestellt wird.

3. Betriebsverfahren nach Anspruch 1 oder 2, wobei, wenn ein Datum (30, 32, 34, 36) der Datenbank (26) eine Beziehung zu zumindest einem weiteren Datum (30, 32, 34, 36) der Datenbank (26) aufweist und von dem Zugriff auf das Datum (30, 32, 34, 36) auch das weitere Datum (30, 32, 34, 36) betroffen ist, für jedes von dem Zugriff betroffene Datum (30, 32, 34, 36) in dessen Puffer (40) der Zustand des Datums (30, 32, 34, 36) vor dem Zugriff gesichert und der gesicherte Zustand im Puffer (40) des weiteren Datums (30, 32, 34, 36) mit dem gesicherten Zustand im Puffer (40) des Datums (30, 32, 34, 36) verknüpft wird.

4. Betriebsverfahren nach Anspruch 3, wobei zum Rückgängigmachen eines Zugriffs auf ein Datum (30, 32, 34, 36), von dem zumindest ein weiteres Datum (30, 32, 34, 36) betroffen ist, unter Verwendung des diesem Datum (30, 32, 34, 36) zugeordneten Puffers (40) ein Zustand des Datums (30, 32, 34, 36) vor dem Zugriff und unter Verwendung etwaiger Verknüpfungen (60) zwischen dem gesicherten Zustand im Puffer (40) des Datums (30, 32, 34, 36) und einem gesicherten Zustand im Puffer (40) des weiteren Datums (30, 32, 34, 36) ein Zustand des weiteren Datums (30, 32, 34, 36) vor dem Zugriff wiederhergestellt wird.

5. Betriebsverfahren nach Anspruch 3 oder 4, wobei vor einem Rückgängigmachen eines Zugriffs auf ein Datum (30, 32, 34, 36) überprüft wird, ob der in dem diesem Datum (30, 32, 34, 36) zugeordneten Puffer (40) vorgehaltene gesicherte Zustand (52, 56, 58) mit einem gesicherten Zustand (52, 56, 58) in einem Puffer (40) eines anderen Datums (30, 32, 34, 36) verknüpft ist und das Rückgängigmachen nur zugelassen wird, wenn das Datum (30, 32, 34, 36) der Ausgangspunkt der Verknüpfung (60) ist.

6. Computerprogramm mit durch einen Computer ausführbaren Programmcodeanweisungen zur Implementierung des Verfahrens nach einem der Ansprüche 1 bis 5, wenn das Computerprogramm auf einem Computer ausgeführt wird.

7. Computerprogrammprodukt, insbesondere Speichermedium, mit einem durch einen Computer ausführbaren Computerprogramm gemäß Anspruch 6.

8. Automatisierungssystem (10) mit zumindest einem Automatisierungsgerät (12, 14, 16, 18, 20) und einem diesem zugeordneten Speicher (28), in dem ein Computerprogramm nach Anspruch 6 implementiert ist.

9. Verwendung eines Betriebsverfahrens nach einem der Ansprüche 1 bis 5 bei Softwareapplikationen, die auf ihre Daten (30, 32, 34, 36) über eine einzelne Datenbankschnittstelle (38) zugreifen, um eine Möglichkeit zu schaffen, mit der auch eine Mehrzahl sich auf unterschiedliche Daten (30, 32, 34, 36) beziehende, aufeinander folgende Zugriffe im Kontext des jeweiligen Datums (30, 32, 34, 36) rückgängig gemacht werden können.
